# EUROPÄISCHE PATENTSCHRIFT

(11) **EP 2 606 233 B1**
(45) Veröffentlichungstag und Bekanntmachung des Hinweises auf die Patenterteilung: **27.03.2019**
(21) Anmeldenummer: 11727687.3
(22) Anmeldetag: 21.06.2011
(51) Int. Cl.: F04B 53/10, F16K 15/02

(54) **VENTIL EINER KOLBENPUMPE MIT EINEM SCHLIEßKÖRPER**
VALVE OF A PISTON PUMP WITH A CLOSING BODY
SOUPAPE D'UNE POMPE À PISTON PRÉSENTANT UN CORPS DE FERMETURE

(30) Priorität: 19.08.2010 DE 102010039501
(43) Veröffentlichungstag der Anmeldung: 26.06.2013
(73) Patentinhaber: Robert Bosch GmbH, 70442 Stuttgart (DE)
(72) Erfinder: ZIMMERMANN, Marc, 87527 Sonthofen (DE); HENNIG, Oliver, 74182 Obersulm (DE)
(86) Internationale Anmeldenummer: PCT/EP2011/060340
(87) Internationale Veröffentlichungsnummer: WO 2012/022522

(56) Entgegenhaltungen:
- EP-A2- 0 309 240
- US-A- 1 939 128
- US-A- 3 332 437

## Beschreibung

### Stand der Technik

Die Erfindung betrifft ein Ventil einer Kolbenpumpe, insbesondere für eine hydraulische Fahrzeugbremsanlage, mit einem Schließkörper und einem Dichtsitz, bei dem der Schließkörper axial geführt gegen den Dichtsitz bewegbar ist und bei dem der Schließkörper zweiteilig mit einem Dämpfungskolben und einem darin eingesetzten Schließelement gebildet ist. Ein solches Ventil ist aus US 1 939 128 A bekannt.

Aus DE 199 28 913 A1 ist eine Kolbenpumpe bekannt, bei der in einem Pumpengehäuse ein einzelnes Pumpenelement bzw. eine Pumpeneinheit von einem Pumpenkolben gebildet ist, der in einem Pumpenzylinder verschiebbar gelagert ist. Der Pumpenkolben saugt dabei Bremsfluid in den Pumpenzylinder hinein und fördert es durch ein Ventil aus dem Pumpenzylinder heraus.

Es ist eine Aufgabe der vorliegenden Erfindung ein Ventil einer Kolbenpumpe zu schaffen, das kostengünstig herstellbar und montierbar ist und dennoch ein besonders gutes Öffnungs- und Schließverhalten zeigt.

### Offenbarung der Erfindung

Erfindungsgemäß ist ein Ventil einer Kolbenpumpe geschaffen, insbesondere für eine hydraulische Fahrzeugbremsanlage, mit einem Schließkörper und einem Dichtsitz, bei dem der Schließkörper axial geführt gegen den Dichtsitz bewegbar ist und bei dem der Schließkörper zweiteilig mit einem Dämpfungskolben und einem darin eingesetzten Schließelement gebildet ist.

Mit dem zweiteiligen Schließkörper ist eine montagetechnisch besonders günstige Konstruktion erzielt, die ferner auch zum Ausgleich von Fertigungsmaßtoleranzen und für das Erreichen der über die Lebensdauer hinweg geforderten Dichtheit besonders gut geeignet ist. Die Erfindung ergibt eine günstige Montagereihenfolge der zu montierenden Bauteile, die mit einem verfahrbaren Werkstückträger gut automatisierbar realisiert werden kann. Das erfindungsgemäße Ventil ist somit einfach herzustellen und hat dennoch sehr positiven Einfluss auf die Hauptfunktionen der zugehörigen Pumpeneinheit. Mit der zweiteiligen Gestaltung des Schließkörpers sind zugleich auch Voraussetzungen geschaffen, die für die Funktion der Ventils besonders vorteilhaft sind, wie nachfolgend noch genauer erläutert werden wird.

Das Schließelement ist ferner erfindungsgemäß an dem Dämpfungskolben mit radialem Spiel gehalten, das insbesondere durch einen radialen Abstand des Schaftes zum umgebenden Dämpfungskolben hergestellt ist.

Bei dieser erfindungsgemäßen Gestaltung ist insbesondere der Durchmesser des dann kreiszylindrischen Schaftes geringfügig kleiner ausgebildet als der Durchmesser einer im Dämpfungskolben ausgeformten, dann kreiszylindrischen Öffnung zum Aufnehmen und Rückhalten des Schaftes. Das derart bereitgestellte radiale Spiel ermöglicht es dem Schließelement sich im Dämpfungskolben geringfügig radial zu bewegen und dabei insbesondere mit seinem Kopf an der Stirnseite des Dämpfungskolbens entlang zu gleiten. Diese radiale Bewegung erlaubt es dem Schließelement, dass es sich an den zugehörigen Ventilsitz vollflächig anlegen kann, ohne dass dabei ein unerwünschter Versatz des Schließelements relativ zum Ventilsitz entstehen könnte.

Das Schließelement ist bevorzugt mit einem an einer Stirnseite des Dämpfungskolbens anliegenden Kopf und einem in den Dämpfungskolben eingesteckten Schaft gebildet. Der Kopf ist vorzugsweise kalottenförmig und/oder der Schaft zylindrisch gestaltet.

Das derartig pilzförmig gestaltete Schließelement ist mit seinem in den Dämpfungskolben einzusteckenden Schaft in besonders gut automatisierbarer Weise zu montieren; insbesondere auf einem verfahrbaren Werkstückträger.

In dem Schließelement, insbesondere in dessen Kopf, ist vorzugsweise an der dem Dichtsitz zugewandten Stirnseite eine zentrale Vertiefung ausgebildet.

Die zentrale Vertiefung bildet einen konkaven Bereich an der Stirnseite des Schließelements, der dem auf das Ventil zuströmenden Fluid zugewandt ist. Dieser konkave Bereich erzeugt Stauwirkung für das anströmende Fluid und führt zu einem besonders guten Öffnungsverhalten des Ventils.

Das Schließelement ist bevorzugt an dem Dämpfungskolben mittels einer Verrastung rückgehalten, insbesondere in Form mindestens einer am Schaft ausgebildeten Raste.

Der derartige Schaft kann durch einfaches Einstecken bzw. Einsetzen und Verrasten bzw. Einrasten an dem Dämpfungskolben montiert und dort befestigt werden. Die mindestens eine Raste ist bevorzugt als Absatz, Klips oder Noppe gestaltet.

An der dem Schließelement zugewandten Stirnseite des Dämpfungskolbens ist bevorzugt mindestens ein Kanal ausgebildet, durch den hindurch ein radiales, von außen nach innen gerichtetes Unterströmen des Schließelements möglich ist.

Durch den Kanal kann Fluid, welches durch die Öffnung des Ventilsitzes hindurch getreten ist, in den Dämpfungskolben hinein, an die Rückseite des Kopfes und auch an die Rückseite des Dämpfungskolbens gelangen. Dieses Fluid kann zu einer gezielt eingestellten Dämpfung der Bewegung des Dämpfungskolbens genutzt werden.

Der Kanal bildet bevorzugt einen Abschnitt einer Strömungsverbindung durch den Dämpfungskolben hindurch zu dessen anderer Stirnseite.

In Strömungsrichtung hinter dem genannten Kanal ist die restliche Strömungsverbindung vorteilhaft mittels einer zentralen Durchgangsöffnung im Dämpfungskolben gebildet, in die dann auch das pilzförmige Schließelement mittels seines Schaftes mit Spiel eingesetzt ist.

In dem Kanal ist vorteilhaft eine Verengung ausgebildet, mit der eine Drossel gebildet ist.

Die Drossel führt dazu, dass das Abströmen von Fluid in das Innere des Dämpfungskolbens hinein und zu dessen Rückseite gezielt gebremst bzw. gestaut werden kann. Auf diese Weise kann gezielt eine stärkere Dämpfungswirkung des Dämpfungskolbens im Hinblick auf ein schwingungsärmeres Verhalten des zugehörigen Schließelements bewirkt werden.

Der Kanal ist bevorzugt mittels einer im Dämpfungskolben ausgeformten radial gerichteten Nut gebildet, deren Öffnungsquerschnitt an einer Stelle in axialer Richtung verkleinert ist.

Diese Gestaltung des Kanals mit der zugehörigen Drossel kann durch einen einfachen Fräsvorgang besonders kostengünstig gefertigt werden.

Die Erfindung betrifft ferner auch eine Kolbenpumpe einer Fahrzeugbremsanlage mit einem derartigen erfindungsgemäßen Ventil.

Nachfolgend wird ein Ausführungsbeispiel der erfindungsgemäßen Lösung anhand der beigefügten schematischen Zeichnungen näher erläutert. Es zeigt:
Fig. 1 einen teilweisen Längsschnitt einer Kolbenpumpe gemäß dem Stand der Technik,
Fig. 2 die Ansicht gemäß Fig. 1 eines ersten Ausführungsbeispiels einer erfindungsgemäßen Kolbenpumpe mit einem zugehörigen Schließkörper,
Fig.3 eine perspektivische Ansicht des Schließkörpers gemäß Fig. 2,
Fig.4 die Ansicht gemäß Fig. 1 eines zweiten Ausführungsbeispiels einer erfindungsgemäßen Kolbenpumpe mit einem zugehörigen Schließkörper und
Fig. 5 eine perspektivische Ansicht des Schließkörpers gemäß Fig. 4.

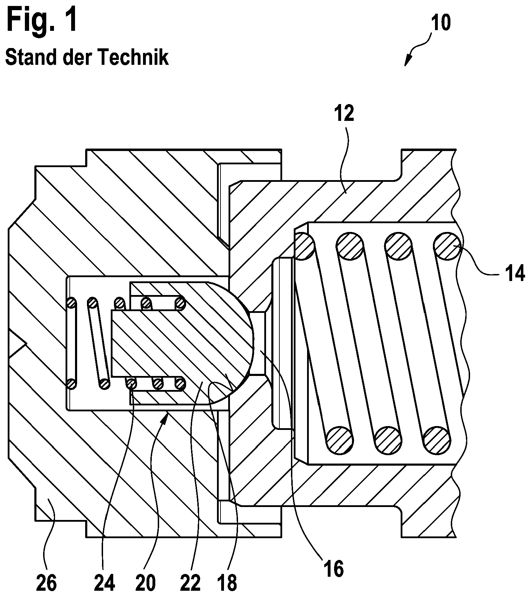

In Fig. 1 ist eine Kolbenpumpe 10 gemäß dem Stand der Technik für eine nicht weiter dargestellte hydraulische Fahrzeugbremsanlage veranschaulicht, die zum Erzeugen eines Fluiddrucks von Bremsfluid innerhalb der Fahrzeugbremsanlage dient. Die Kolbenpumpe 10 weist dazu ein becherförmiges Zylinder 12 auf, in dem gegen eine Schraubenfeder 14 ein nicht dargestellter Kolben verschiebbar gelagert ist. Der Kolben fördert Bremsfluid durch eine im Bodenbereich des Zylinders 12 ausgebildete, kreisrunde Abströmöffnung 16. Die Abströmöffnung 16 ist von einem Ventilsitz bzw. Dichtsitz 18 umgeben, der Teil eines Auslassventils 20 ist. Das Auslassventil 20 umfasst ferner einen einteiligen, kalottenförmigen Schließkörper 22, der mittels einer Schraubenfeder 24 gegen den Dichtsitz 18 gedrängt ist. Die Schraubenfeder 24 ist an einem Pumpendeckel 26 abgestützt, der den Zylinder 12 stirnseitig umfasst.

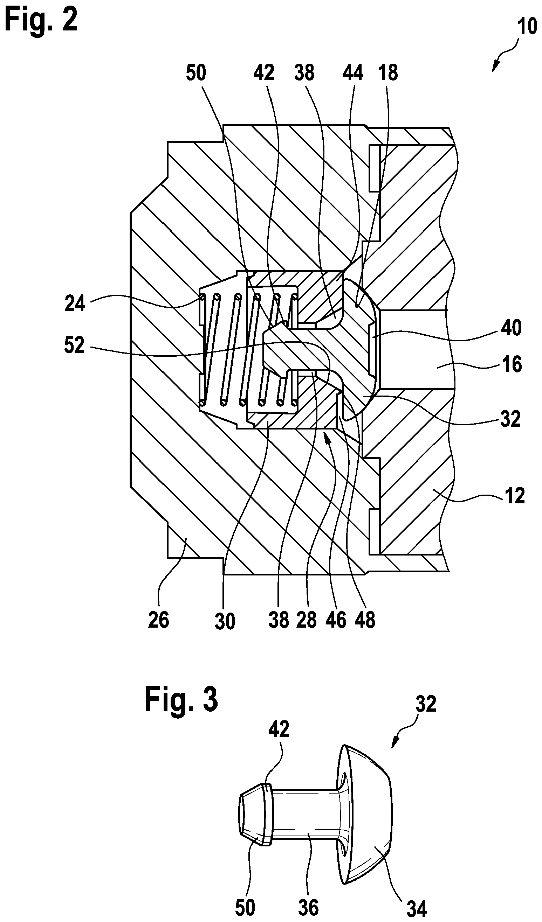

Die Fig. 2 und 3 zeigen ein erstes Ausführungsbeispiel einer erfindungsgemäßen Kolbenpumpe 10, bei der das Auslassventil 20 mit einem zweiteiligen Schließkörper 28 gebildet ist. Der Schließkörper 28 umfasst einen Dämpfungskolben 30 sowie ein darin eingesetztes pilzförmiges Schließelement 32.

Auf diese Weise ist eine Konstruktion geschaffen, mit der Fertigungsmaßtoleranzen insbesondere zwischen dem Dichtsitz 18 und dem Schließkörper 28 in radialer Richtung ausgeglichen werden können. Das Schließelement 32 liegt dabei mit seiner schaftseitigen Stirnfläche an der Stirnseite des Dämpfungskolbens 30 an und ist geringfügig radial bewegbar. Das Schließelement 32 umfasst einen derart anliegenden Kopf 34 sowie und einem in den Dämpfungskolben 30 eingesteckten und dort hineinragenden Schaft 36.

Das Schließelement 32 ist mit seinem Schaft 36 in eine im Dämpfungskolben 30 ausgebildete zentrale Durchgangsöffnung 38 eingesteckt worden und weist an seinem Kopf 34 an der dem Dichtsitz 18 zugewandten Stirnseite eine zentrale Vertiefung 40 auf. Diese zentrale Vertiefung 40 erzeugt Stauwirkung für das anströmende Fluid und führt zu einem verbesserten Öffnungsverhalten des Auslassventils 20.

Das Schließelement 32 ist an dem Dämpfungskolben 30 mittels einer Verrastung rückgehalten, die bei dem in den Fig. 2 und 3 dargestellten Ausführungsbeispiel mit einem am freien Ende des Schaftes 36 ausgebildeten umlaufenden Absatz 42 gebildet ist. Der Durchmesser des Absatzes 42 ist geringfügig größer als der Durchmesser der Durchgangsöffnung 38. Der restliche Schaft 36 weist einen geringfügig kleineren Durchmesser auf als die Durchgangsöffnung 38. Das Schließelement 32 ist auf diese Weise an dem Dämpfungskolben 30 mit radialem Spiel gehalten, was insbesondere durch den dann radialen Abstand des Schaftes 36 zum ihn umgebenden Dämpfungskolben 30 gewährleistet ist.

An der dem Schließelement 32 zugewandten Stirnseite 44 des Dämpfungskolbens 30 ist ein radial ausgerichteter Kanal 46 ausgeformt, durch den hindurch Fluid unter dem Kopf 34 hindurch in das Innere des Dämpfungskolbens 30 und zu dessen Rückseite strömen kann. Dieses Fluid trägt zu einer bei unterschiedlichen Betriebsdrücken gezielt einstellbaren Dämpfung der Bewegung des Dämpfungskolbens 30 bei. Der Dämpfungskolben 30 ist dabei an seiner Rückseite ebenfalls mittels einer Schraubenfeder 24 federnd vorgespannt, die sich an einem Pumpendeckel 26 abstützt.

In dem Kanal 46 ist eine Verengung 48 ausgebildet, mit der eine Drossel gebildet ist. Diese Drossel bremst gezielt das Abströmen von Fluid in das Innere des Dämpfungskolbens 30 hinein.

Zum Einfügen des Schließelements 32 mittels seines Schaftes 36 in die Durchgangsöffnung 38 hinein, ist sowohl am freien Ende des Schaftes 36 als auch am stirnseitigen Rand der Durchgangsöffnung 38 je eine Phase 50 bzw. 52 ausgebildet.

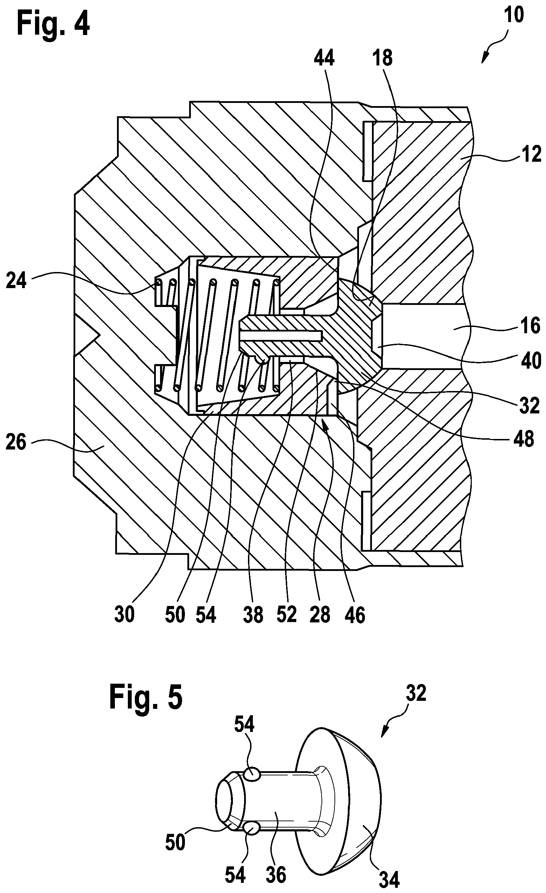

In den Fig. 4 und 5 ist ein Ausführungsbeispiel eines erfindungsgemäßen zweiteiligen Schließkörpers 28 veranschaulicht, bei dem die Verrastung zwischen dem Dämpfungskolben 30 und dem pilzförmigen Schließelement 32 mittels Noppen 54 hergestellt ist. Die Noppen 54 befinden sich über den Umfang des zugehörigen Schaftes 36 hinweg in regelmäßigen Abständen verteilt dort, wo bei dem Ausführungsbeispiel gemäß Fig. 2 und 3 der Absatz 42 ausgebildet ist.

## Patentansprüche

1. Ventil (20) einer Kolbenpumpe, insbesondere für eine hydraulische Fahrzeugbremsanlage, mit einem Schließkörper (28) und einem Dichtsitz (18), bei dem der Schließkörper (28) axial geführt gegen den Dichtsitz (18) bewegbar ist und
bei dem der Schließkörper (28) zweiteilig mit einem Dämpfungskolben (30) und einem darin eingesetzten Schließelement (32) gebildet ist,
**dadurch gekennzeichnet, dass** das Schließelement (32) an dem Dämpfungskolben (30) mit radialem Spiel gehalten ist.

2. Ventil nach Anspruch 1,
**dadurch gekennzeichnet, dass** das Schließelement (32) mit einem an einer Stirnseite des Dämpfungskolbens (30) anliegenden Kopf (34) und einem in den Dämpfungskolben (30) eingesteckten Schaft (36) gebildet ist.

3. Ventil nach Anspruch 2,
**dadurch gekennzeichnet, dass** das radiale Spiel durch einen radialen Abstand des Schaftes (36) zum umgebenden Dämpfungskolben (30) hergestellt ist.

4. Ventil nach einem der Ansprüche 1 bis 3,
**dadurch gekennzeichnet, dass** in dem Schließelement (32), insbesondere in dessen Kopf (34) an der dem Dichtsitz (18) zugewandten Stirnseite eine zentrale Vertiefung (40) ausgebildet ist.

5. Ventil nach einem der Ansprüche 1 bis 4,
**dadurch gekennzeichnet, dass** das Schließelement (32) an dem Dämpfungskolben (30) mittels einer Verrastung (42; 54) rückgehalten ist, insbesondere in Form mindestens einer an dessen Schaft (36) ausgebildeten Raste.

6. Ventil nach einem der Ansprüche 1 bis 5,
**dadurch gekennzeichnet, dass** an der dem Schließelement (32) zugewandten Stirnseite (44) des Dämpfungskolbens (30) mindestens ein Kanal (46) ausgebildet ist, durch den hindurch ein radiales von außen nach innen gerichtetes Unterströmen des Schließelements (32) möglich ist.

7. Ventil nach Anspruch 6,
**dadurch gekennzeichnet, dass** der Kanal (46) ein Abschnitt einer Strömungsverbindung durch den Dämpfungskolben (30) hindurch zu dessen anderer Stirnseite bildet.

8. Ventil nach Anspruch 6 oder 7,
**dadurch gekennzeichnet, dass** in dem Kanal (46) eine Verengung (48) ausgebildet ist, mit der eine Drossel gebildet ist.

9. Ventil nach Anspruch 8,
**dadurch gekennzeichnet, dass** der Kanal (46) mittels einer im Dämpfungskolben (30) ausgeformten radial gerichteten Nut gebildet ist, deren Öffnungsquerschnitt an einer Stelle in axialer Richtung verkleinert ist.

10. Kolbenpumpe einer Fahrzeugbremsanlage mit einem Ventil (20) nach einem der Ansprüche 1 bis 9.

## Claims

1. Valve (20) of a piston pump, in particular for a hydraulic vehicle brake system, with a closing body (28) and a sealing seat (18), in which the closing body (28) can be moved in an axially guided manner against the sealing seat (18) and
in which the closing body (28) is formed in two pieces with a damping piston (30) and a closing element (32) inserted therein, **characterized in that** the closing element (32) is held on the damping piston (30) with radial play.

2. Valve according to Claim 1, **characterized in that** the closing element (32) is formed with a head (34) lying on a face of the damping piston (30) and a shaft (36) inserted in the damping piston (30) .

3. Valve according to Claim 2, **characterized in that** the radial play is created by a radial spacing of the shaft (36) from the surrounding damping piston (30) .

4. Valve according to any of Claims 1 to 3, **characterized in that** a central depression (40) is formed in the closing element (32), in particular in its head (34), on the end facing the sealing seat (18).

5. Valve according to any of Claims 1 to 4, **characterized in that** the closing element (32) is retained on the damping piston (30) by means of a catch (42; 54), in particular in the form of at least one catch formed on its shaft (36).

6. Valve according to any of Claims 1 to 5, **characterized in that** on the end (44) of the damping piston (30) facing towards the closing element (32) is formed at least one channel (46) through which an underflow, directed radially from outside to inside, of the closing element (32) is possible.

7. Valve according to Claim 6, **characterized in that** the channel (46) forms a segment of a flow connection through the damping piston (30) to its other end.

8. Valve according to Claim 6 or 7, **characterized in that** in the channel (46) is formed a constriction (48) which forms a choke.

9. Valve according to Claim 8, **characterized in that** the channel (46) is formed by means of a radially oriented groove formed in the damping piston (30), the opening cross section of which groove is reduced in the axial direction at one point.

10. Piston pump of a vehicle brake system with a valve (20) according to any of Claims 1 to 9.

## Revendications

1. Soupape (20) d'une pompe à piston, en particulier pour une installation hydraulique de frein de véhicule, comprenant un corps de fermeture (28) et un siège d'étanchéité (18), le corps de fermeture (28) pouvant être déplacé de manière guidée axialement vers le siège d'étanchéité (18), et
le corps de fermeture (28) étant réalisé en deux parties avec un piston d'amortissement (30) et un élément de fermeture (32) inséré dans celui-ci, **caractérisée en ce que** l'élément de fermeture (32) est retenu sur le piston d'amortissement (30) avec un jeu radial.

2. Soupape selon la revendication 1,
**caractérisée en ce que** l'élément de fermeture (32) est formé avec une tête (34) s'appliquant contre un côté frontal du piston d'amortissement (30) et une tige (36) enfichée dans le piston d'amortissement (30).

3. Soupape selon la revendication 2,
**caractérisée en ce que** le jeu radial est établi par une distance radiale de la tige (36) au piston d'amortissement (30) l'entourant.

4. Soupape selon l'une quelconque des revendications 1 à 3,
**caractérisée en ce que** dans l'élément de fermeture (32), en particulier dans sa tête (34), au niveau du côté frontal tourné vers le siège d'étanchéité (18), est réalisé un renfoncement central (40).

5. Soupape selon l'une quelconque des revendications 1 à 4,
**caractérisée en ce que** l'élément de fermeture (32) est retenu au niveau du piston d'amortissement (30) au moyen d'un encliquetage (42 ; 54), en particulier sous la forme d'au moins un cran réalisé au niveau de sa tige (36).

6. Soupape selon l'une quelconque des revendications 1 à 5,
**caractérisée en ce qu'**au niveau du côté frontal (44) du piston d'amortissement (30) tourné vers l'élément de fermeture (32) est réalisé au moins un canal (46) à travers lequel un écoulement orienté radialement de l'extérieur vers l'intérieur peut passer en dessous de l'élément de fermeture (32).

7. Soupape selon la revendication 6,
**caractérisée en ce que** le canal (46) forme une portion d'une liaison fluidique à travers le piston d'amortissement (30) jusqu'à son autre côté frontal.

8. Soupape selon la revendication 6 ou 7,
**caractérisée en ce qu'**un rétrécissement (48) est réalisé dans le canal (46), avec lequel est formé un étranglement.

9. Soupape selon la revendication 8,
**caractérisée en ce que** le canal (46) est formé au moyen d'une rainure orientée radialement formée dans le piston d'amortissement (30), dont la section transversale d'ouverture est rétrécie dans la direction axiale à un endroit.

10. Pompe à piston d'une installation de frein de véhicule comprenant une soupape (20) selon l'une quelconque des revendications 1 à 9.
